# EUROPEAN PATENT SPECIFICATION

(11) **EP 3 698 944 B1**
(45) Date of publication and mention of the grant of the patent: **07.02.2024**
(21) Application number: 20158054.5
(22) Date of filing: 18.02.2020
(51) Int. Cl.: B29C 64/112, B29C 64/393

(54) **THREE-DIMENSIONAL OBJECT MANUFACTURING SYSTEM AND THREE-DIMENSIONAL OBJECT MANUFACTURING PROGRAM**
SYSTEM ZUR HERSTELLUNG DREIDIMENSIONALER OBJEKTE UND PROGRAMM ZUR HERSTELLUNG DREIDIMENSIONALER OBJEKTE
SYSTÈME ET PROGRAMME DE FABRICATION D'OBJET TRIDIMENSIONNEL

(30) Priority: 19.02.2019 JP 2019027244
(43) Date of publication of application: 26.08.2020
(73) Proprietor: Mimaki Engineering Co., Ltd., Tomi-city Nagano 389-0512 (JP)
(72) Inventor: Harayama, Kenji, Tomi-city, Nagano 389-0512 (JP); Kazaana, Takeaki, Tomi-city, Nagano 389-0512 (JP)
(74) Representative: Horn Kleimann Waitzhofer Schmid-Dreyer Patent- und Rechtsanwälte PartG mbB

(56) References cited:
- WO-A1-2017/072766
- WO-A1-2017/204200
- US-A1- 2018 117 856

## Description

### TECHNICAL FIELD

The present disclosure relates to a three-dimensional object manufacturing system and a three-dimensional object manufacturing program for manufacturing a three-dimensional object with ink.

### DESCRIPTION OF THE BACKGROUND ART

As a conventional three-dimensional object manufacturing system, a three-dimensional object manufacturing system in which, at the time of manufacturing a three-dimensional object including a target shaped object, which is the target, and a support portion for supporting the target shaped object when shaping the target shaped object through an inkjet head method, at least one of an interior of the target shaped object and an interior of the support portion is filled with color ink for forming a color layer to realize the color of an outer appearance of the target shaped object (see e.g., Japanese Unexamined Patent Publication No. 2016-26915), is known.

Here, in the manufacturing of the three-dimensional object, white ink (hereinafter referred to as "white ink") for forming the interior of the target shaped object, transparent ink (hereinafter referred to as "clear ink") for forming the interior of the target shaped object, and an ink for forming a support portion (hereinafter referred to as "support ink") may be used other than the color ink.

US 2018/0117856A1 discloses a method for manufacturing a three-dimensional object including an object body portion and a decorative portion, the method including forming the object body portion from at least decorative ink and build material and forming the decorative portion from the decorative ink. The decorative portion covers the object body portion.

WO 2017/204200 A1 discloses a shaping device having a configuration that is more suitable for shaping a shaped article. The shaping device shapes a three-dimensional shaped article by discharging ink and comprises an ink container retention part which serves as a first container retention part that retains an ink container which serves as a first ink container; an ink container retention part which serves as a second ink container retention part that retains an ink container which serves as a second ink container; a first discharge head that discharges ink supplied from the ink container; and a second discharge head that discharges ink supplied from the ink container. The volume of the ink container is smaller than the volume of the ink container.

WO 2017/072766 A1 discloses a method for carrying out additive manufacture while regulating material consumption, comprising making a digital representation of at least part of an object for printing, the representation comprising a plurality of voxels, and then identifying voxels which are flexible in respect of being able to consist of any one of at least two available materials. A balanced material consumption policy is then used to choose between the available materials so as to ensure that as far as possible, different materials are evenly used and wastage is minimized. Finally the object is printed with the selected materials. A different embodiment discloses a material consumption policy which selects a material for a given voxel based on a preference for using a material close to an expiry date.

### SUMMARY

The thickness of the color layer of the target shaped object is usually very thin. Thus, the amount of color ink used to form the color layer of the target shaped object is extremely small as compared with the amount of white ink, clear ink, and support ink when a layer (hereinafter referred to as an "interior layer") formed of color ink is not provided inside the target shaped object or the support portion. Therefore, when the interior layer is not provided inside the target shaped object or the support portion, at least a part of the color ink stored in a cartridge that stores ink to be supplied to an inkjet head has a high possibility of being discarded due to expiration.

Furthermore, conventionally, there is a possibility that ink discarded due to expiration may occur other than the color ink.

Furthermore, conventionally, there exists a user's demand for efficiently consuming ink from a viewpoint other than the viewpoint of expiration date, such as a demand for manufacturing a three-dimensional object using low-cost ink.

Therefore, the present disclosure provides a three-dimensional object manufacturing system and a three-dimensional object manufacturing program that can efficiently consume ink while preventing the outer appearance of a target shaped object from changing.

A three-dimensional object manufacturing system of the present disclosure relates to a three-dimensional object manufacturing system having the features of claim 1.

According to such a configuration, the three-dimensional object manufacturing system of the present disclosure manufactures the three-dimensional object by forming a part of an interior of the three-dimensional object with an ink that is different from an ink according to original manufacturing data, in such a manner that the outer appearance of the target shaped object is the same as if the three-dimensional object was manufactured by forming the entire three-dimensional object with the ink according to the original manufacturing data, and thus the ink can be efficiently consumed while preventing the outer appearance of the target shaped object from changing.

In the three-dimensional object manufacturing system of the present disclosure, the plurality of inks may include a coloring ink for forming a colored layer on a surface of the target shaped object, and an inner ink for filling in an inner layer of the target shaped object, on an inner side of the colored layer, and the three-dimensional object manufacturing system may form a portion that does not affect a color of the colored layer when observed from an outer side of the target shaped object in the inner layer with the coloring ink different from the inner ink according to the original manufacturing data.

According to such a configuration, the three-dimensional object manufacturing system of the present disclosure forms a portion in the inner layer of the target shaped object, that does not affect a color of the colored layer when observed from an outer side of the target shaped object, with coloring ink different from the inner ink according to the original manufacturing data, and thus the coloring ink can be efficiently consumed while preventing the color of the outer appearance of the target shaped object from changing.

In the three-dimensional object manufacturing system of the present disclosure, a part of the interior of the three-dimensional object may be formed with ink whose expiration date is earlier than the ink according to the original manufacturing data.

According to such a configuration, the three-dimensional object manufacturing system according to the present disclosure forms a part of the interior of the three-dimensional object with ink whose expiration date is earlier than the ink according to the original manufacturing data, and thus the possibility of discarding the ink due to expiration can be reduced.

In the three-dimensional object manufacturing system of the present disclosure, a part of the interior of the three-dimensional object may be formed with ink that is lower in price than the ink according to the original manufacturing data.

According to such a configuration, the three-dimensional object manufacturing system of the present disclosure forms a part of the interior of the three-dimensional object with an ink of lower price than the ink according to the original manufacturing data, and thus the manufacturing cost of the three-dimensional object can be reduced.

In the three-dimensional object manufacturing system of the present disclosure, if there is an insufficient amount of ink if the entire interior of the three-dimensional object were to be formed with the ink according to the original manufacturing data, then a part of the interior of the three-dimensional object may be formed not with the ink that becomes insufficient in amount if the interior of the three-dimensional object were to be entirely formed with the ink according to the original manufacturing data but with an ink that would remain if the entire three-dimensional object were to be formed with the ink according to the original manufacturing data.

According to such a configuration, when there is an insufficient amount of ink if the interior of the three-dimensional object were to be entirely formed with an ink according to original manufacturing data, then the three-dimensional object manufacturing system of the present disclosure forms a part of the interior of the three-dimensional object not with an ink that would become insufficient in amount if the interior of the three-dimensional object were to be entirely formed with the ink according to the original manufacturing data but with an ink that would remain if the entire three-dimensional object were to be formed with the ink according to the original manufacturing data, and thus the possibility of discontinuing the manufacturing of the three-dimensional object due to insufficiency of ink can be reduced.

In the three-dimensional object manufacturing system of the present disclosure, the three-dimensional object includes a support portion for supporting the target shaped object at the time of shaping of the target shaped object as required, the ink includes a coloring ink for forming a colored layer for realizing a color of the outer appearance of the target shaped object, and a non-coloring ink that is not the coloring ink for forming at least one of the target shaped object, excluding the colored layer, and the support portion, the three-dimensional object manufacturing system includes an inkjet head that ejects the ink, and an ejection controller that controls ejection of the ink by the inkjet head, and the ejection controller fills at least one of the interior of the target shaped object and the interior of the support portion that is not the colored layer preferentially with the ink whose expiration date is closest among the plurality of coloring inks.

According to such a configuration, the three-dimensional object manufacturing system of the present disclosure fills at least one of the interior of the target shaped object and the interior of the support portion with the ink whose expiration date is closest among the plurality of coloring inks, and thus the possibility of discarding ink due to expiration can be reduced.

In the three-dimensional object manufacturing system of the present disclosure, the ejection controller may fill the coloring ink to at least one of the interior of the target shaped object and the interior of the support portion that is not the colored layer while ensuring a necessary coloring ink amount that is an amount of coloring ink necessary for forming the colored layer.

According to such a configuration, in the three-dimensional object manufacturing system of the present disclosure, at least one of the interior of the target shaped object and the interior of the support portion is filled with the coloring ink while ensuring the amount of the coloring ink necessary for realizing the color of the outer appearance of the target shaped object, and thus the possibility of appropriately realizing the color of the outer appearance of the target shaped object even if at least one of the interior of the target shaped object and the interior of the support portion is filled with the coloring ink can be enhanced.

A three-dimensional object manufacturing system of the present disclosure relates to a three-dimensional object manufacturing system for manufacturing a three-dimensional object with ink, in which the three-dimensional object includes a target shaped object serving as a target, the three-dimensional object includes a support portion for supporting the target shaped object at the time of shaping of the target shaped object as required, the ink includes a coloring ink for forming a colored layer for realizing a color of an outer appearance of the target shaped object, and a non-coloring ink that is not the coloring ink for forming at least one of the target shaped object, excluding the colored layer, and the support portion, the three-dimensional object manufacturing system includes an inkjet head that ejects the ink, and an ejection controller that controls ejection of the ink by the inkjet head, and the ejection controller fills at least one of the interior of the target shaped object and the interior of the support portion that is not the colored layer with the coloring ink while ensuring a necessary coloring ink amount which is an amount of the coloring ink necessary for forming the colored layer.

According to such a configuration, in the three-dimensional object manufacturing system of the present disclosure, at least one of the interior of the target shaped object and the interior of the support portion is filled with the coloring ink while ensuring the amount of the coloring ink necessary for realizing the color of the outer appearance of the target shaped object, and thus the possibility of appropriately realizing the color of the outer appearance of the target shaped object even if at least one of the interior of the target shaped object and the interior of the support portion is filled with the coloring ink can be enhanced.

In the three-dimensional object manufacturing system of the present disclosure, when it is apparent before the start of the shaping of the three-dimensional object that the amount of non-coloring ink is insufficient to form at least one of the target shaped object, excluding the colored layer, and the support portion with only the non-coloring ink, the ejection controller may start the shaping of the three-dimensional object when the insufficient amount is less than or equal to a remaining amount obtained by subtracting the necessary coloring ink amount from the amount of the coloring ink held by the three-dimensional object manufacturing system, and may not start the shaping of the three-dimensional object when the insufficient amount exceeds the remaining amount.

According to such a configuration, when it is apparent before the start of the shaping of the three-dimensional object that the non-coloring ink is insufficient in amount to form at least one of the target shaped object, excluding the colored layer, and the support portion with only the non-coloring ink, the three-dimensional object manufacturing system of the present disclosure does not start the shaping of the three-dimensional object when the insufficient amount exceeds the remaining amount obtained by subtracting the amount of coloring ink necessary for realizing the color of the outer appearance of the target shaped object from the amount of coloring ink held by the three-dimensional object manufacturing system, and thus the possibility of appropriately realizing the color of the outer appearance of the target shaped object even if at least one of the interior of the target shaped object and the interior of the support portion is filled with the coloring ink can be enhanced.

In the three-dimensional object manufacturing system of the present disclosure, when it becomes apparent during the shaping of the three-dimensional object that the amount of non-coloring ink is insufficient to form at least one of the target shaped object, excluding the colored layer, and the support portion with only the non-coloring ink, the ejection controller may fill at least one of the interior of the target shaped object and the interior of the support portion that is not the colored layer with the coloring ink.

According to such a configuration, when it becomes apparent during the shaping of the three-dimensional object that the amount of non-coloring ink is insufficient to form at least one of the target shaped object, excluding the colored layer, and the support portion with only the non-coloring ink, the three-dimensional object manufacturing system of the present disclosure fills at least one of the interior of the target shaped object and the interior of the support portion with the coloring ink, and thus the possibility of completing the three-dimensional object can be enhanced.

A three-dimensional object manufacturing program of the present disclosure relates to a three-dimensional object manufacturing program for manufacturing a three-dimensional object with a plurality of inks, in which the three-dimensional object includes a target shaped object serving as a target, and the three-dimensional object manufacturing program causes a computer to realize the manufacturing of the three-dimensional object by forming a part of an interior of the three-dimensional object with an ink that is different from an ink according to original manufacturing data, in such a manner that an outer appearance of the target shaped object is the same as if the three-dimensional object was manufactured by forming the entire three-dimensional object with the ink according to the original manufacturing data.

According to such a configuration, the computer for executing the three-dimensional object manufacturing program of the present disclosure manufactures the three-dimensional object by forming a part of an interior of the three-dimensional object with an ink that is different from an ink according to original manufacturing data, in such a manner that the outer appearance of the target shaped object is the same as if the three-dimensional object was manufactured by forming the entire three-dimensional object with the ink according to the original manufacturing data, and thus the ink can be efficiently consumed while preventing the outer appearance of the target shaped object from changing.

The three-dimensional object manufacturing system and the three-dimensional object manufacturing program of the present disclosure can efficiently consume ink while preventing the outer appearance of the target shaped object from being changed.

### BRIEF DESCRIPTION OF THE DRAWINGS

FIG. 1 is a schematic front view of a part of a 3D printer according to one embodiment of the present disclosure.
FIG. 2 is a schematic side view of a part of the 3D printer shown in FIG. 1.
FIG. 3 is a block diagram of the 3D printer shown in FIG. 1.
FIG. 4 is a front cross-sectional view of an example of a three-dimensional object manufactured by the 3D printer shown in FIG. 1.
FIG. 5 is a flowchart showing a part of the operation of the 3D printer shown in

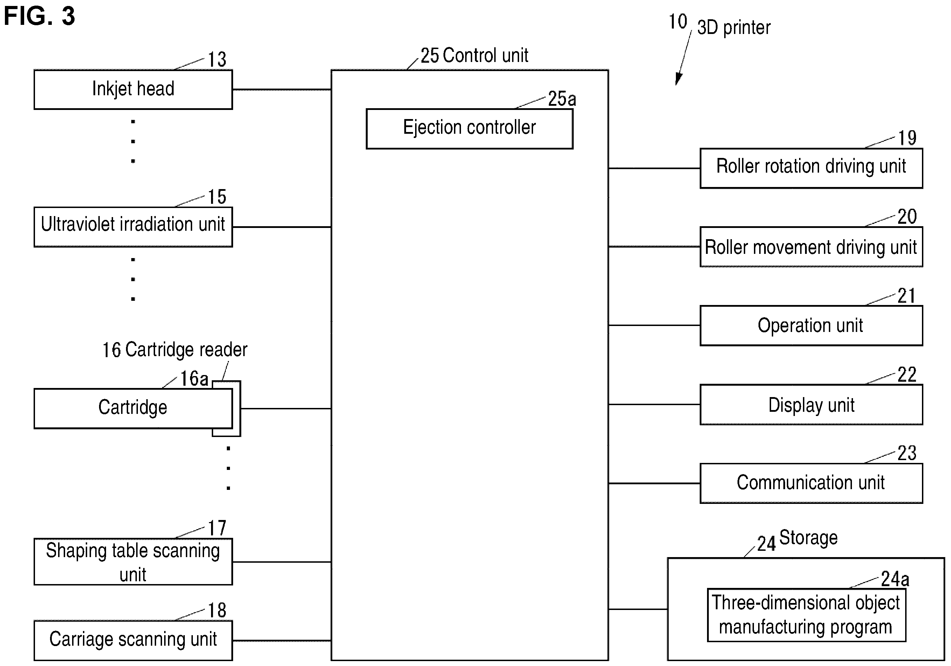

FIG. 3 when starting the shaping of the three-dimensional object.

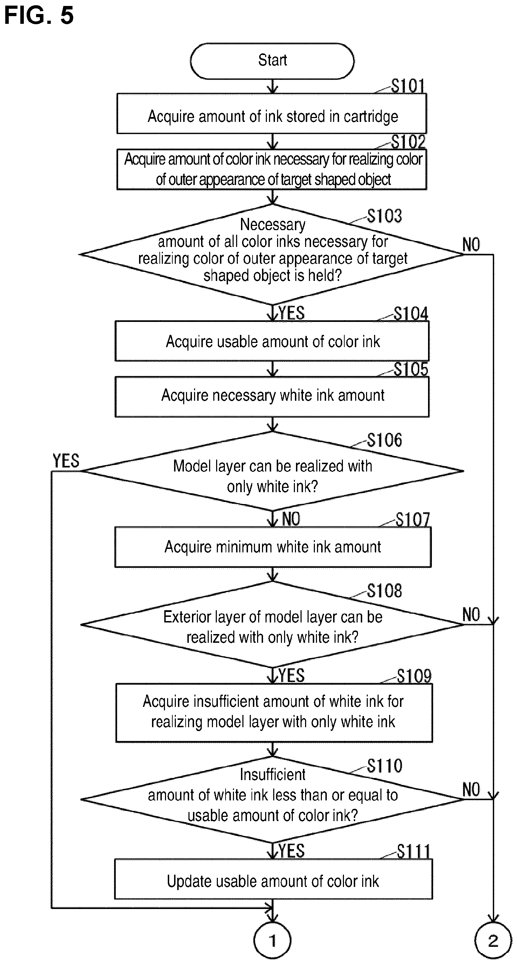

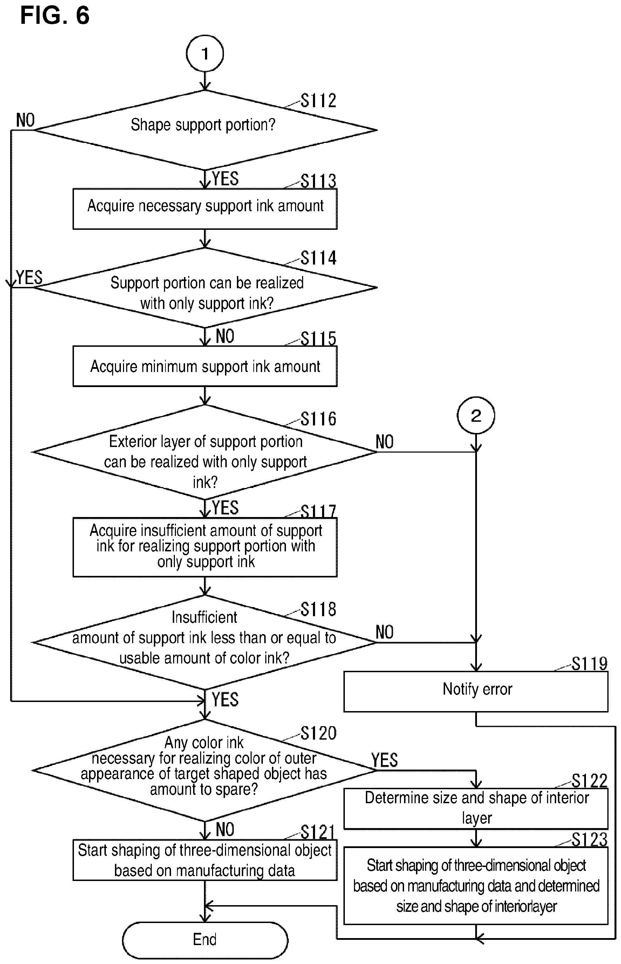

FIG. 6 is a flowchart subsequent to the flowchart shown in FIG. 5.

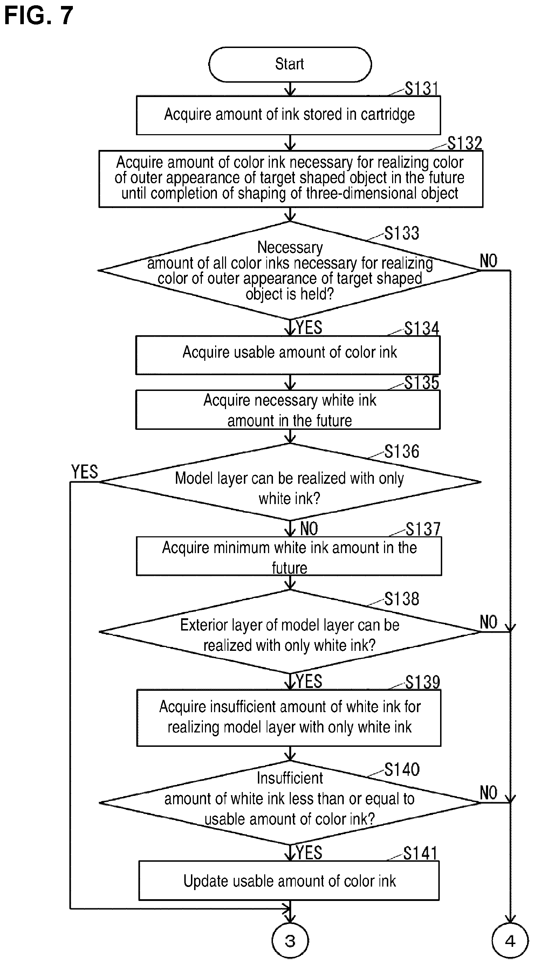

FIG. 7 is a flowchart of a part of the operation of the 3D printer shown in FIG. 3 when determining whether or not there is a need to change the size and shape of the interior layer during the shaping of the three-dimensional object.

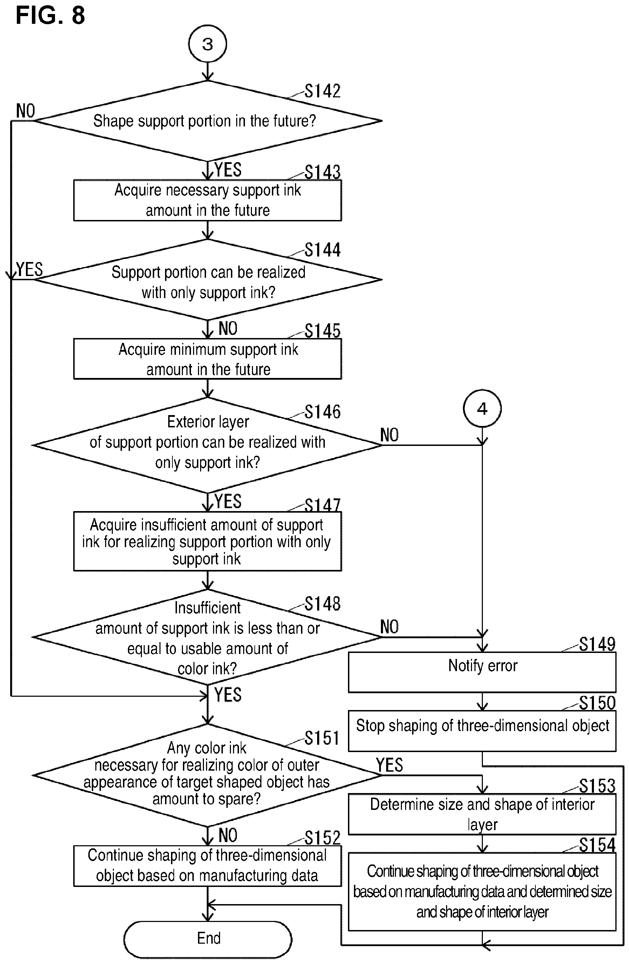

FIG. 8 is a flowchart subsequent to the flowchart shown in FIG. 7.

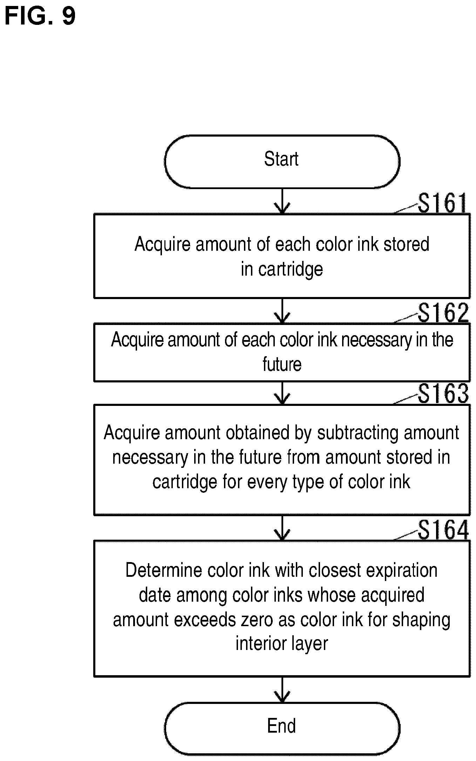

FIG. 9 is a flowchart of the operation of the 3D printer shown in FIG. 3 when determining the color ink for shaping the interior layer.

### DETAILED DESCRIPTION OF EMBODIMENTS

Hereinafter, an embodiment of the present disclosure will be described with reference to the drawings.

First, a configuration of a 3D printer serving as a three-dimensional object manufacturing system according to one embodiment of the present disclosure will be described.

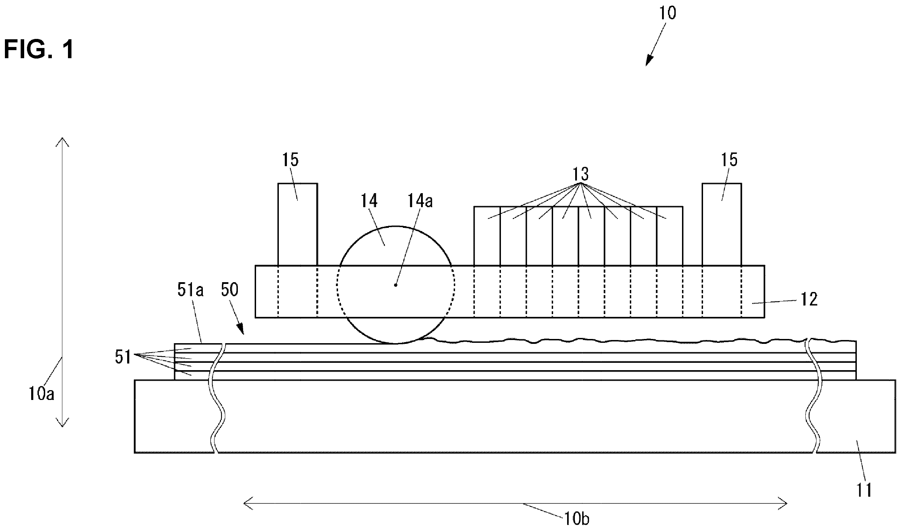

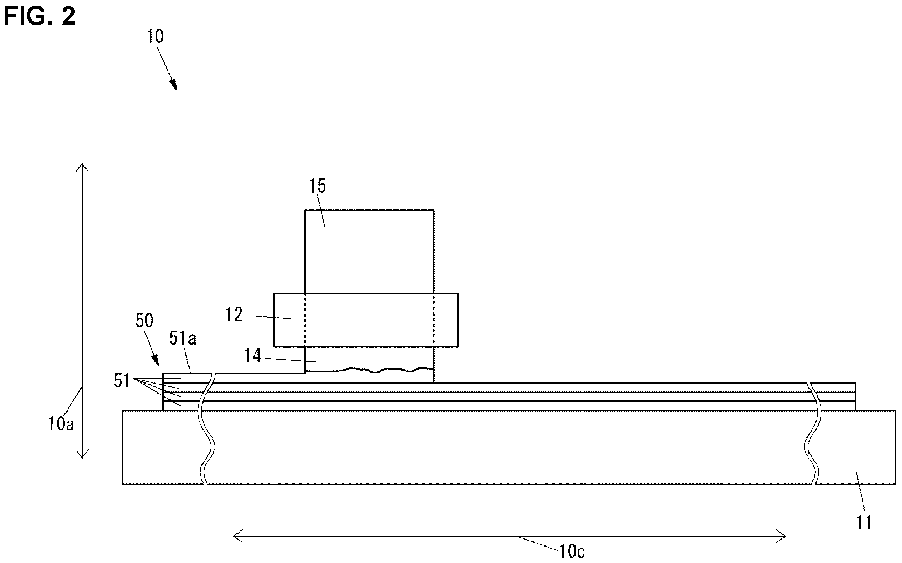

FIG. 1 is a schematic front view of a part of a 3D printer 10 according to the present embodiment. FIG. 2 is a schematic side view of a part of the 3D printer 10.

As shown in FIGs. 1 and 2, the 3D printer 10 includes a shaping table 11 serving as a table of a three-dimensional object 50 when the three-dimensional object 50 is manufactured, a carriage 12 disposed on an upper side of the shaping table 11 in a vertical direction indicated by an arrow 10a and being movable in a left-right direction indicated by an arrow 10b orthogonal to the vertical direction, a plurality of inkjet heads 13 that eject an ultraviolet-curable ink toward a lower side in the vertical direction to form an ink layer 51, a flattening roller 14 serving as a flattening mechanism that flattens a surface 51a of the ink layer 51 by removing a part on the surface 51a side of the ink layer 51 formed by the inkjet heads 13 and adjusts a thickness of the ink layer 51 to a specific thickness, and a plurality of ultraviolet irradiation units 15 that irradiate ultraviolet light toward the ink layer 51 flattened by the flattening roller 14. The 3D printer 10 is an apparatus that layers and stacks the ink layers 51 formed by ink in the vertical direction to ultimately manufacture the entire three-dimensional object 50.

The shaping table 11 is movable in the vertical direction with respect to the carriage 12, and is also movable with respect to the carriage 12 in a front-back direction indicated by an arrow 10c orthogonal to both the vertical direction and the left-right direction.

The inkjet heads 13, the flattening roller 14, and the ultraviolet irradiation unit 15 are mounted on the carriage 12.

The inkjet head 13 ejects ink from a plurality of nozzles (not shown) arranged in the front-back direction. The 3D printer 10 may, for example, include an inkjet head that ejects cyan ink (hereinafter referred to as "cyan ink") serving as color ink, an inkjet head that ejects magenta ink (hereinafter referred to as "magenta ink") serving as color ink, an inkjet head that ejects yellow ink (hereinafter referred to as "yellow ink") serving as color ink, an inkjet head that ejects black ink (hereinafter referred to as "black ink") serving as color ink, an inkjet head that ejects white ink (hereinafter referred to as "white ink") serving as ink that is not color ink (hereinafter referred to as "non-color ink"), an inkjet head that ejects transparent ink (hereinafter referred to as "clear ink") serving as a non-color ink, and an inkjet head that ejects ink (hereinafter referred to as "support ink") for forming a support portion, to be described later, at the inkjet head 13. The support ink is ink that can be easily removed after curing, such as ink that can be removed with a specific liquid such as water after curing.

The flattening roller 14 is extended in the front-back direction, and is mounted on the carriage 12 in a rotatable state about a center axis 14a extending in the front-back direction.

FIG. 3 is a block diagram of the 3D printer 10.

As shown in FIG. 3, the 3D printer 10 includes the plurality of inkjet head 13, the plurality of ultraviolet irradiation units 15, a plurality of cartridge readers 16 that acquire various types of information from each of the plurality of cartridges 16a storing ink to be supplied to the inkjet head 13, a shaping table scanning unit 17 that moves the shaping table 11 (see FIG. 1), a carriage scanning unit 18 that moves the carriage 12 (see FIG. 1), a roller rotation driving unit 19 that rotates the flattening roller 14 about the center axis 14a (see FIG. 1) of the flattening roller 14 (see FIG. 1), a roller movement driving unit 20 that moves the flattening roller 14 in the vertical direction, an operation unit 21 which is an input device such as, for example, a keyboard, a mouse, and the like to which various operations are input, a display unit 22 which is a display device such as a liquid crystal display (LCD) that displays various types of information, a communication unit 23 which is a communication device that communicates with an external device via the network or directly in a wired or wireless manner without interposing the network, a storage 24 which is a nonvolatile storage device such as a semiconductor memory, a hard disk drive (HDD), and the like that stores various types of information, a control unit 25 that controls the entire 3D printer 10.

The 3D printer 10 may have, for example, a cartridge that stores cyan ink, a cartridge that stores magenta ink, a cartridge that stores yellow ink, a cartridge that stores black ink, a cartridge that stores white ink, a cartridge that stores clear ink, and a cartridge that stores support ink attached as the cartridge 16a.

The cartridge reader 16 can acquire the expiration date of the ink stored in the cartridge 16a from a storage medium such as an integrated circuit (IC) chip attached to the cartridge 16a. Furthermore, the cartridge reader 16 can acquire the amount of ink stored in the cartridge 16a from the cartridge 16a.

A shaping table scanning unit 17 can move the shaping table 11 in the vertical direction and in the front-back direction.

The carriage scanning unit 18 can move the carriage 12 in the left-right direction.

The roller movement driving unit 20 lowers the flattening roller 14 when the ink layer 51 is flattened by the flattening roller 14, and raises the flattening roller 14 when the ink layer 51 is not flattened by the flattening roller 14.

The storage 24 stores a three-dimensional object manufacturing program 24a for manufacturing the three-dimensional object 50. The three-dimensional object manufacturing program 24a may be installed, for example, in the 3D printer 10 at the time of manufacturing the 3D printer 10, may be additionally installed in the 3D printer 10 from an external storage medium such as a USB (Universal Serial Bus) memory, or may be additionally installed in the 3D printer 10 from the network.

The control unit 25 includes, for example, a central processing unit (CPU), a read only memory (ROM) that stores programs and various data, and a random access memory (RAM) used as a work area of the CPU of the control unit 25. The CPU of the control unit 25 executes the program stored in the ROM of the control unit 25 or the storage 24. That is, the control unit 25 constitutes a computer.

The control unit 25 realizes an ejection controller 25a that controls the ejection of ink by the inkjet head 13 by executing the three-dimensional object manufacturing program 24a.

Next, the three-dimensional object 50 manufactured by the 3D printer 10 will be described.

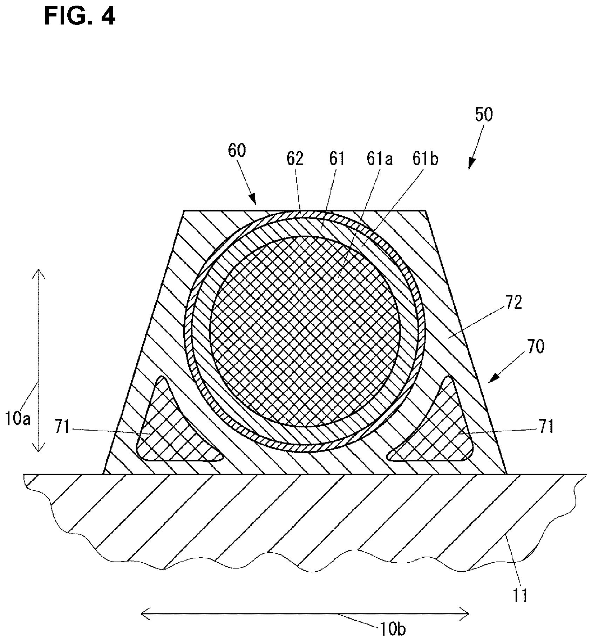

FIG. 4 is a front cross-sectional view of an example of the three-dimensional object 50.

A three-dimensional object 50 shown in FIG. 4 includes a target shaped object 60 which is a target, and a support portion 70 for supporting the target shaped object 60 at the time of shaping the target shaped object 60. The support portion 70 is provided as necessary. That is, the support portion 70 does not need to be provided if the target shaped object 60 does not need to be supported at the time of shaping the target shaped object 60.

The target shaped object 60 includes a model layer 61 that realizes the shape of the target shaped object 60, and a color layer 62 serving as a colored layer that is provided outside the model layer 61 to realize the color of the outer appearance of the target shaped object 60.

The model layer 61 constitutes an inner layer on the inner side of the color layer 62 of the target shaped object 60. The model layer 61 is formed by white ink or is formed by both white ink and clear ink, and also plays a role of reflecting the light from the outside that has passed through the color layer 62 and returning it again to the outside for visualization. However, the model layer 61 may be interiorly provided with a layer (hereinafter, referred to as "interior layer") 61a formed of color ink. In a case where the model layer 61 includes the interior layer 61a, a portion of the model layer 61 other than the interior layer 61a is hereinafter referred to as an exterior layer 61b. The thickness of the exterior layer 61b is preferably an appropriate thickness such as, for example, 2 mm to greater than or equal to 3 mm to prevent the color of the interior layer 61a from being transmitted to the outside of the target shaped object 60, and to have the color of the outer appearance of the target shaped object 60 appropriately realized. The ejection controller 25a may be instructed with the thickness of the exterior layer 61b through the operation unit 21 or the communication unit 23.

The color layer 62 is formed of color ink. That is, the color ink constitutes a coloring ink for forming the color layer 62 serving as a colored layer on the surface of the target shaped object 60. The white ink and the clear ink are non-coloring inks that are not coloring inks, and constitute the inner ink filled in the model layer 61 serving as the inner layer on the inner side of the color layer 62 in the target shaped object 60. The thickness of the color layer 62 is, for example, 150 µm to 300 µm.

The support portion 70 is formed of a support ink which is a non-coloring ink. However, the support portion 70 may interiorly include an interior layer 71 formed of color ink. In a case where the support portion 70 includes the interior layer 71, a portion other than the interior layer 71 in the support portion 70 is hereinafter referred to as an exterior layer 72. Note that the interior layer 71 may exist at the boundary of the support portion 70 as long as it does not contact the target shaped object 60. The thickness of the exterior layer 72 is preferably an appropriate thickness that allows the support portion 70 to be appropriately removed from the target shaped object 60. The ejection controller 25a may be instructed with the thickness of the exterior layer 72 through the operation unit 21 or the communication unit 23.

Next, the operation of the 3D printer 10 will be described.

First, the operation of the 3D printer 10 when starting the shaping of the three-dimensional object 50 will be described.

FIGs. 5 and 6 are flowcharts of the operation of the 3D printer 10 when starting the shaping of the three-dimensional object 50.

When the control unit 25 receives the manufacturing data of the three-dimensional object 50 through the communication unit 23, the control unit 25 executes the operations shown in FIGs. 5 and 6. The manufacturing data received from outside through the communication unit 23 is also referred to as "original manufacturing data" in the following. It contains information about which ink to use at specific locations of the manufactured object. If an object is printed with the ink indicated by the original manufactured data, then it is printed with "ink according to the original manufacturing data".

In accordance with the present embodiment, not the entire object is printed with the ink according to the original manufacturing data, and some of the ink used to print the object is different from the ink according to the original manufacturing data. For this, the original manufacturing data is changed into revised manufacturing data, which contains information about the ink(s) used at any specific locations of the actually manufactured object.

As shown in FIGs. 5 and 6, the ejection controller 25a acquires the amount of ink stored in the cartridge 16a through the cartridge reader 16 (S101).

Next, the ejection controller 25a acquires the amount of color ink necessary for realizing the color of the outer appearance of the target shaped object 60, that is, the amount of color ink necessary for realizing the color layer 62 based on the manufacturing data (S102).

Next, the ejection controller 25a determines whether or not it has a necessary amount for all the color inks necessary for realizing the color of the outer appearance of the target shaped object 60 (S103). Here, the ejection controller 25a determines that it has a necessary amount when the amount acquired in S101 is greater than or equal to the amount acquired in S102 with respect to the color ink necessary for realizing the color of the outer appearance of the target shaped object 60. On the other hand, the ejection controller 25a determines that it does not have the necessary amount when the amount acquired in S101 is less than the amount acquired in S102 with respect to the color ink necessary for realizing the color of the outer appearance of the target shaped object 60.

When determining in S103 that it has the necessary amount for all the color inks necessary for realizing the color of the outer appearance of the target shaped object 60, the ejection controller 25a acquires the remaining amount obtained by excluding the total amount of color ink acquired in S102 (hereinafter referred to as "necessary color ink amount" in the description of the operation shown in FIGs. 5 and 6) from the total amount of all the color inks acquired in S101 as a usable amount of color ink (S104).

Next, the ejection controller 25a acquires the amount of white ink (hereinafter referred to as "necessary white ink amount") necessary for realizing the model layer 61 based on the manufacturing data when realizing the model layer 61 with only the white ink (white ink and/or clear ink depending on the manufacturing data; the same applies hereinafter) (S105).

Next, the ejection controller 25a determines whether or not the model layer 61 can be realized with only white ink based on the amount of white ink acquired in S101 and the necessary white ink amount acquired in S105 (S106). Here, when the amount of white ink acquired in S101 is greater than or equal to the necessary white ink amount acquired in S105, the ejection controller 25a determines that the model layer 61 can be realized with only white ink. On the other hand, when the amount of white ink acquired in S101 is less than the necessary white ink amount acquired in S105, the ejection controller 25a determines that the model layer 61 cannot be realized with only white ink.

When determining in S106 that the model layer 61 cannot be realized with only white ink, the ejection controller 25a acquires the amount of white ink (hereinafter referred to as "minimum white ink amount") necessary for realizing the exterior layer 61b when realizing the exterior layer 61b with only white ink based on the manufacturing data (S107).

Next, the ejection controller 25a determines whether or not the exterior layer 61b can be realized with only white ink based on the amount of white ink acquired in S101 and the minimum white ink amount acquired in S107 (S108). Here, when the amount of white ink acquired in S101 is greater than or equal to the minimum white ink amount acquired in S107, the ejection controller 25a determines that the exterior layer 61b can be realized with only white ink. On the other hand, when the amount of white ink acquired in S101 is less than the minimum white ink amount acquired in S107, the ejection controller 25a determines that the exterior layer 61b cannot be realized with only white ink.

When determining in S108 that the exterior layer 61b can be realized with only white ink, the ejection controller 25a acquires an insufficient amount of white ink for realizing the model layer 61 with only white ink by subtracting the amount of white ink acquired in S101 from the necessary white ink amount acquired in S105 (S109).

Next, the ejection controller 25a determines whether or not the insufficient amount of white ink acquired in S109 is less than or equal to the usable amount of color ink (S110).

When determining in S110 that the insufficient amount of white ink is less than or equal to the usable amount of color ink, the ejection controller 25a updates the usable amount of color ink by subtracting the insufficient amount of white ink acquired in S109 from the usable amount of color ink (S111).

When determining in S106 that the model layer 61 can be realized with only white ink or executing the process of S111, the ejection controller 25a determines whether or not to shape the support portion 70 based on the manufacturing data (S112).

When determining in S112 to shape the support portion 70, the ejection controller 25a acquires the amount of support ink (hereinafter referred to as "necessary support ink amount") necessary for realizing the support portion 70 when realizing the support portion 70 with only support ink based on the manufacturing data (S113).

Next, the ejection controller 25a determines whether or not the support portion 70 can be realized with only the support ink, based on the amount of support ink acquired in S101 and the necessary support ink amount acquired in S113 (S114). Here, when the amount of support ink acquired in S101 is greater than or equal to the necessary support ink amount acquired in S113, the ejection controller 25a determines that the support portion 70 can be realized with only the support ink. On the other hand, when the amount of support ink acquired in S101 is less than the necessary support ink amount acquired in S113, the ejection controller 25a determines that the support portion 70 cannot be realized with only the support ink.

When determining in S114 that the support portion 70 cannot be realized with only the support ink, the ejection controller 25a acquires an amount of support ink necessary for realizing the exterior layer 72 when the exterior layer 72 is realized with only the support ink (hereinafter referred to as "minimum support ink amount") based on the manufacturing data (S115).

Next, the ejection controller 25a determines whether or not the exterior layer 72 can be realized with only the support ink based on the amount of support ink acquired in S101 and the minimum support ink amount acquired in S115 (S116). Here, when the amount of support ink acquired in S101 is greater than or equal to the minimum support ink amount acquired in S115, the ejection controller 25a determines that the exterior layer 72 can be realized with only the support ink. On the other hand, when the amount of support ink acquired in S101 is less than the minimum support ink amount acquired in S115, the ejection controller 25a determines that the exterior layer 72 cannot be realized with only the support ink.

When determining in S116 that the exterior layer 72 can be realized with only the support ink, the ejection controller 25a acquires an insufficient amount of support ink for realizing the support portion 70 with only the support ink by subtracting the amount of support ink acquired in S101 from the necessary support ink amount acquired in S113 (S117).

Next, the ejection controller 25a determines whether or not the insufficient amount of support ink acquired in S117 is less than or equal to the usable amount of color ink (S118).

When determining in S103 that it does not have the necessary amount for at least one color ink necessary for realizing the color of the outer appearance of the target shaped object 60, determining in S108 that the exterior layer 61b cannot be realized with only white ink, determining in S110 that the insufficient amount of white ink is not less than or equal to the usable amount of color ink, determining in S116 that the exterior layer 72 cannot be realized with only the support ink, or determining in S118 that the insufficient amount of support ink is not less than or equal to the usable amount of color ink, the ejection controller 25a notifies of an error through at least one of the display unit 22 and the communication unit 23 (S119), and does not start the shaping of the three-dimensional object 50.

When determining in S112 that the support portion 70 is not shaped, determining in S114 that the support portion 70 can be realized with only the support ink, or determining in S118 that the insufficient amount of support ink is less than or equal to the usable amount of color ink, the ejection controller 25a determines whether or not any of the color inks necessary for realizing the color of the outer appearance of the target shaped object 60 has some amount to spare (S120). Here, the ejection controller 25a determines that there is an amount to spare when the amount acquired in S101 exceeds the amount acquired in S102 with respect to the color ink necessary for realizing the color of the outer appearance of the target shaped object 60. On the other hand, the ejection controller 25a determines that there is no amount to spare when the amount acquired in S101 is the same as the amount acquired in S102 with respect to the color ink necessary to realize the color of the outer appearance of the target shaped object 60.

When determining in S120 that all the color inks necessary for realizing the color of the outer appearance of the target shaped object 60 do not have an amount to spare, the ejection controller 25a starts to shape the three-dimensional object 50 based on the manufacturing data (S121).

When determining in S120 that any of the color inks necessary for realizing the color of the outer appearance of the target shaped object 60 has an amount to spare, the ejection controller 25a determines the sizes and shapes of the interior layer 61a and the interior layer 71 (S122). Here, the ejection controller 25a determines the total size of the interior layer 61a and the interior layer 71 as the size and shape to be shaped by the color ink of an amount less than or equal to the remaining amount obtained by excluding the necessary color ink amount from the total amount of all color inks acquired in S101. Furthermore, the ejection controller 25a determines the size and shape of the interior layer 61a while ensuring the minimum size and shape of the exterior layer 61b. Similarly, the ejection controller 25a determines the size and shape of the interior layer 71 while ensuring the minimum size and shape of the exterior layer 72. Furthermore, when determining in S106 that the model layer 61 cannot be realized with only the white ink, the ejection controller 25a determines the size and shape of the interior layer 61a as the size and shape to be shaped by the color ink of an amount greater than or equal to an insufficient amount acquired in S109. Similarly, when determining in S114 that the support portion 70 cannot be realized with only the support ink, the ejection controller 25a determines the size and shape of the interior layer 71 as the size and shape to be shaped by the color ink of an amount greater than or equal to the insufficient amount acquired in S117.

After the process of S122, the ejection controller 25a starts to shape the three-dimensional object 50 based on the manufacturing data and the sizes and shapes of the interior layer 61a and the interior layer 71 determined in S122 (S123).

The ejection controller 25a terminates the operation shown in FIGs. 5 and 6 after the process of S119, S121, or S123.

Next, the operation of the 3D printer 10 when determining whether or not there is a need to change the size and shape of the interior layer 61a or the interior layer 71 during the shaping of the three-dimensional object 50 will be described.

FIGs. 7 and 8 are flowcharts of the operation of the 3D printer 10 when determining that there is a need to change the size and shape of the interior layer 61a or the interior layer 71 during the shaping of the three-dimensional object 50.

The control unit 25 repeatedly executes the operations shown in FIGs. 7 and 8 during the shaping of the three-dimensional object 50.

As shown in FIGs. 7 and 8, the ejection controller 25a acquires the amount of ink stored in the cartridge 16a through the cartridge reader 16 (S131).

Next, the ejection controller 25a acquires the amount of color ink necessary for realizing the color of the outer appearance of the target shaped object 60, that is, the amount of color ink necessary for realizing the color layer 62 in the future until the completion of the shaping of the three-dimensional object 50 based on the manufacturing data (S132).

Next, the ejection controller 25a determines whether or not it has a necessary amount for all the color inks necessary for realizing the color of the outer appearance of the target shaped object 60 (S133). Here, the ejection controller 25a determines that it has a necessary amount when the amount acquired in S131 is greater than or equal to the amount acquired in S132 with respect to the color ink necessary for realizing the color of the outer appearance of the target shaped object 60. On the other hand, the ejection controller 25a determines that it does not have the necessary amount when the amount acquired in S131 is less than the amount acquired in S132 with respect to the color ink necessary for realizing the color of the outer appearance of the target shaped object 60.

When determining in S133 that it has the necessary amount for all the color inks necessary for realizing the color of the outer appearance of the target shaped object 60, the ejection controller 25a acquires the remaining amount obtained by excluding the total amount of color ink acquired in S132 (hereinafter referred to as "necessary color ink amount" in the description of the operation shown in FIGs. 7 and 8) from the total amount of all the color inks acquired in S131 as a usable amount of color ink (S134).

Next, the ejection controller 25a acquires the necessary white ink amount in the future until the completion of the shaping of the three-dimensional object 50 based on the manufacturing data (S135).

Next, the ejection controller 25a determines whether or not the model layer 61 can be realized with only white ink based on the amount of white ink acquired in S131 and the necessary white ink amount acquired in S135 (S136). Here, when the amount of white ink acquired in S131 is greater than or equal to the necessary white ink amount acquired in S135, the ejection controller 25a determines that the model layer 61 can be realized with only white ink. On the other hand, when the amount of white ink acquired in S131 is less than the necessary white ink amount acquired in S135, the ejection controller 25a determines that the model layer 61 cannot be realized with only white ink.

When determining in S136 that the model layer 61 cannot be realized with only white ink, the ejection controller 25a acquires the minimum white ink amount in the future until the completion of the shaping of the three-dimensional object 50 based on the manufacturing data (S137).

Next, the ejection controller 25a determines whether or not the exterior layer 61b can be realized with only white ink based on the amount of white ink acquired in S131 and the minimum white ink amount acquired in S137 (S138). Here, when the amount of white ink acquired in S131 is greater than or equal to the minimum white ink amount acquired in S137, the ejection controller 25a determines that the exterior layer 61b can be realized with only white ink. On the other hand, when the amount of white ink acquired in S131 is less than the minimum white ink amount acquired in S137, the ejection controller 25a determines that the exterior layer 61b cannot be realized with only white ink.

When determining in S138 that the exterior layer 61b can be realized with only white ink, the ejection controller 25a acquires an insufficient amount of white ink for realizing the model layer 61 with only white ink by subtracting the amount of white ink acquired in S131 from the necessary white ink amount acquired in S135 (S139).

Next, the ejection controller 25a determines whether or not the insufficient amount of white ink acquired in S139 is less than or equal to the usable amount of color ink (S140).

When determining in S140 that the insufficient amount of white ink is less than or equal to the usable amount of color ink, the ejection controller 25a updates the usable amount of color ink by subtracting the insufficient amount of white ink acquired in S139 from the usable amount of color ink (S141).

When determining in S136 that the model layer 61 can be realized with only white ink or executing the process of S141, the ejection controller 25a determines whether or not to shape the support portion 70 in the future until the completion of the shaping of the three-dimensional object 50 based on the manufacturing data (S142).

When determining in S142 to shape the support portion 70, the ejection controller 25a acquires the amount of support ink necessary in the future until the completion of the shaping of the three-dimensional object 50 based on the manufacturing data (S143).

Next, the ejection controller 25a determines whether or not the support portion 70 can be realized with only the support ink, based on the amount of support ink acquired in S131 and the necessary support ink amount acquired in S143 (S144). Here, when the amount of support ink acquired in S131 is greater than or equal to the necessary support ink amount acquired in S143, the ejection controller 25a determines that the support portion 70 can be realized with only the support ink. On the other hand, when the amount of support ink acquired in S131 is less than the necessary support ink amount acquired in S143, the ejection controller 25a determines that the support portion 70 cannot be realized with only the support ink.

When determining in S144 that the support portion 70 cannot be realized with only the support ink, the ejection controller 25a acquires the minimum support ink amount in the future until the completion of the shaping of the three-dimensional object 50 based on the manufacturing data (S145).

Next, the ejection controller 25a determines whether or not the exterior layer 72 can be realized with only the support ink based on the amount of support ink acquired in S131 and the minimum support ink amount acquired in S145 (S146). Here, when the amount of support ink acquired in S131 is greater than or equal to the minimum support ink amount acquired in S145, the ejection controller 25a determines that the exterior layer 72 can be realized with only the support ink. On the other hand, when the amount of support ink acquired in S131 is less than the minimum support ink amount acquired in S145, the ejection controller 25a determines that the exterior layer 72 cannot be realized with only the support ink.

When determining in S146 that the exterior layer 72 can be realized with only the support ink, the ejection controller 25a acquires an insufficient amount of support ink for realizing the support portion 70 with only the support ink by subtracting the amount of support ink acquired in S131 from the necessary support ink amount acquired in S143 (S147).

Next, the ejection controller 25a determines whether or not the insufficient amount of support ink acquired in S147 is less than or equal to the usable amount of color ink (S148).

When determining in S133 that it does not have the necessary amount for at least one color ink necessary for realizing the color of the outer appearance of the target shaped object 60, determining in S138 that the exterior layer 61b cannot be realized with only white ink, determining in S140 that the insufficient amount of white ink is not less than or equal to the usable amount of color ink, determining in S146 that the exterior layer 72 cannot be realized with only the support ink, or determining in S148 that the insufficient amount of support ink is not less than or equal to the usable amount of color ink, the ejection controller 25a notifies of an error through at least one of the display unit 22 and the communication unit 23 (S149), and stops the shaping of the three-dimensional object 50 (S150).

When determining in S142 that the support portion 70 is not shaped, determining in S144 that the support portion 70 can be realized with only the support ink, or determining in S148 that the insufficient amount of support ink is less than or equal to the usable amount of color ink, the ejection controller 25a determines whether or not any of the color inks necessary for realizing the color of the outer appearance of the target shaped object 60 has some amount to spare (S151). Here, the ejection controller 25a determines that there is an amount to spare when the amount acquired in S131 exceeds the amount acquired in S132 with respect to the color ink necessary for realizing the color of the outer appearance of the target shaped object 60. On the other hand, the ejection controller 25a determines that there is no amount to spare when the amount acquired in S131 is the same as the amount acquired in S132 with respect to the color ink necessary to realize the color of the outer appearance of the target shaped object 60.

When determining in S151 that all the color inks necessary for realizing the color of the outer appearance of the target shaped object 60 do not have an amount to spare, the ejection controller 25a continues to shape the three-dimensional object 50 based on the manufacturing data (S152).

When determining in S151 that any of the color inks necessary for realizing the color of the outer appearance of the target shaped object 60 has an amount to spare, the ejection controller 25a determines the sizes and shapes of the interior layer 61a and the interior layer 71 (S153). Here, the ejection controller 25a determines the total size of the interior layer 61a and the interior layer 71 as the size and shape to be shaped by the color ink of an amount less than or equal to the remaining amount obtained by excluding the necessary color ink amount from the total amount of all color inks acquired in S131. Furthermore, the ejection controller 25a determines the size and shape of the interior layer 61a while ensuring the minimum size and shape of the exterior layer 61b. Similarly, the ejection controller 25a determines the size and shape of the interior layer 71 while ensuring the minimum size and shape of the exterior layer 72. Furthermore, when determining in S136 that the model layer 61 cannot be realized with only the white ink, the ejection controller 25a determines the size and shape of the interior layer 61a as the size and shape to be shaped by the color ink of an amount greater than or equal to an insufficient amount acquired in S139. Similarly, when determining in S144 that the support portion 70 cannot be realized with only the support ink, the ejection controller 25a determines the size and shape of the interior layer 71 as the size and shape to be shaped by the color ink of an amount greater than or equal to the insufficient amount acquired in S147. Note that when the size and shape of the interior layer 61a can be maintained to the size and shape of before the start of the operation shown in FIGs. 7 and 8 of this time, the ejection controller 25a may maintain the size and shape of the interior layer 61a to the size and shape of before the start of the operation shown in FIGs. 7 and 8 of this time. Similarly, when the size and shape of the interior layer 71 can be maintained to the size and shape of before the start of the operation shown in FIGs. 7 and 8 of this time, the ejection controller 25a may maintain the size and shape of the interior layer 71 to the size and shape of before the start of the operation shown in FIGs. 7 and 8 of this time.

After the process of S153, the ejection controller 25a starts to shape the three-dimensional object 50 based on the manufacturing data and the sizes and shapes of the interior layer 61a and the interior layer 71 determined in S153 (S154).

The ejection controller 25a terminates the operation shown in FIGs. 7 and 8 after the process of S150, S152, or S154.

Next, the operation of the 3D printer 10 when determining the color ink for shaping the interior layer 61a and the interior layer 71 will be described.

FIG. 9 is a flowchart of the operation of the 3D printer 10 when determining the color ink for shaping the interior layer 61a and the interior layer 71.

When starting the shaping of the three-dimensional object 50, the control unit 25 repeatedly executes the operation shown in FIG. 9.

As shown in FIG. 9, the ejection controller 25a acquires the amount of each color ink stored in the cartridge 16a through the cartridge reader 16 (S161).

Next, the ejection controller 25a acquires the amount of each color ink necessary in the future to realize the color of the outer appearance of the target shaped object 60 based on the manufacturing data (S162).

The ejection controller 25a then acquires, for each type of color ink, an amount obtained by subtracting the amount acquired in S162 from the amount acquired in S161 (S163).

Next, the ejection controller 25a determines the color ink with the closest expiration date acquired through the cartridge reader 16 of the color inks whose amount acquired in S163 exceeds zero as the color ink for shaping the interior layer 61a and the interior layer 71 (S164), and terminates the operation shown in FIG. 9. Therefore, when shaping the interior layer 61a and the interior layer 71, the ejection controller 25a uses the color ink of the type determined in S164.

In the operation shown in FIG. 9, the ejection controller 25a determines to fill the interior layer 61a and the interior layer 71 preferentially with the ink with the closest expiration date among the color inks. However, the ejection controller 25a may adopt a standard other than the expiration date as a standard for determining the color ink to be filled in the interior layer 61a and the interior layer 71. For example, the ejection controller 25a may keep control about the prices of the inks, and determine to fill the interior layer 61a and the interior layer 71 preferentially with the ink of low price among the color inks, or may determine to fill the interior layer 61a and the interior layer 71 preferentially with the ink whose amount acquired in S163 is large among the color inks. Furthermore, the ejection controller 25a may use a plurality of standards in a stepwise manner as a standard for determining the color ink to be filled in the interior layer 61a and the interior layer 71. For example, the ejection controller 25a may determine to fill the interior layer 61a and the interior layer 71 preferentially with the ink with the closest expiration date among the color inks, or may determine to fill the interior layer 61a and the interior layer 71 preferentially with the ink with low price among the color inks with the same expiration date. The ejection controller 25a may determine a method for determining the color ink to be filled in the interior layer 61a and the interior layer 71 in accordance with an instruction through the operation unit 21 or the communication unit 23.

As described above, the 3D printer 10 manufactures the three-dimensional object 50 by forming a part of the interior of the three-dimensional object 50 with an ink that is different from the ink according to the original manufacturing data, in such a manner that the outer appearance of the target shaped object 60 is the same as if the three-dimensional object 50 was manufactured by forming the entire three-dimensional object 50 with an ink according to original manufacturing data, that is, an ink normally used based on the manufacturing data (S122 to S123 and S153 to S154), and thus can efficiently consume the ink while preventing the outer appearance of the target shaped object 60 from changing.

The 3D printer 10 forms the portion that does not affect the color of the color layer 62 when observed from the outer side of the target shaped object 60, that is, the interior layer 61a of the model layer 61 of the target shaped object 60 with a color ink different from the white ink and the clear ink according to the original manufacturing data, and thus can efficiently consume the color ink while preventing the color of the outer appearance of the target shaped object 60 from changing.

The 3D printer 10 fills at least one of the interior layer 61a of the target shaped object 60 and the interior layer 71 of the support portion 70 with the color ink while ensuring the amount of color ink necessary for realizing the color of the outer appearance of the target shaped object 60 (S122 to S123 and S153 to S154), and thus can enhance the possibility of appropriately realizing the color of the outer appearance of the target shaped object 60 even if the color ink is filled to at least one of the interior layer 61a of the target shaped object 60 and the interior layer 71 of the support portion 70.

The thickness of the color layer 62 of the target shaped object 60 is very thin. Therefore, the amount of color ink used to form the color layer 62 is extremely small as compared with the amount of white ink, clear ink, and support ink used when at least one of the interior layer 61a and the interior layer 71 is not provided in the three-dimensional object 50. Therefore, when at least one of the interior layer 61a and the interior layer 71 is not provided in the three-dimensional object 50, the possibility that at least a part of the color ink stored in the cartridge 16a will be discarded due to expiration is high. Since at least one of the interior layer 61a and the interior layer 71 is provided on the three-dimensional object 50, the possibility that the color ink will be discarded due to expiration can be reduced with the 3D printer 10.

If there is an insufficient amount of ink if the interior of the three-dimensional object 50 were to be entirely formed with an ink according to original manufacturing data, the 3D printer 10 forms a part of the interior of the three-dimensional object 50 not with an ink that would be insufficient in amount if the interior of the three-dimensional object 50 were to be entirely formed with the ink according to the original manufacturing data but with an ink that would remain if the entire three-dimensional object 50 were to be formed with the ink according to the original manufacturing data, and thus the possibility of discontinuing the manufacturing of the three-dimensional object 50 due to insufficiency of ink can be reduced.

To form at least one of the target shaped object 60 excluding the color layer 62 and the support portion 70 with only non-color ink, in a case where it is apparent before the start of shaping of the three-dimensional object 50 that the non-color ink is insufficient in amount (NO in S106, or NO in S114), when the insufficient amount exceeds the remaining amount obtained by excluding the amount of color ink necessary for realizing the color of the outer appearance of the target shaped object 60 from the amount of color ink held by the 3D printer 10 (NO in S110, or NO in S118), the 3D printer 10 does not start the shaping of the three-dimensional object 50 (S119), and thus can enhance the possibility of appropriately realizing the color of the outer appearance of the target shaped object 60 even if the color ink is filled to at least one of the interior layer 61a of the target shaped object 60 and the interior layer 71 of the support portion 70.

To form at least one of the target shaped object 60 excluding the color layer 62 and the support portion 70 with only non-color ink, the 3D printer 10 fills at least one of the interior layer 61a of the target shaped object 60 and the interior layer 71 of the support portion 70 with the color ink to (S153 to S154) when it becomes apparent that the amount of non-color ink will become insufficient during the shaping of the three-dimensional object 50 (NO in S136 or NO in S144), and thus can enhance the possibility of completing the three-dimensional object 50.

Since the 3D printer 10 fills at least one of the interior layer 61a of the target shaped object 60 and the interior layer 71 of the support portion 70 preferentially with an ink with close expiration date among a plurality of color inks (S164), the possibility of discarding ink due to expiration can be reduced. That is, since the 3D printer 10 forms a part of the interior of the three-dimensional object 50 with an ink whose expiration date is earlier than the ink according to the original manufacturing data, the possibility of discarding the ink due to the expiration can be reduced.

In the present embodiment, the 3D printer 10 forms the interior layer 61a of the target shaped object 60 and the interior layer 71 of the support portion 70 with color ink. However, the 3D printer 10 may form the interior layer 61a of the target shaped object 60 and the interior layer 71 of the support portion 70 with non-color ink. For example, the 3D printer 10 may form at least a part of the interior layer 61a of the target shaped object 60 with support ink while ensuring the amount of support ink necessary for realizing the support portion 70 when the expiration date of the support ink is the closest among the inks held by the 3D printer 10, may form at least a part of the interior layer 71 of the support portion 70 with white ink while ensuring the amount of white ink necessary for realizing the model layer 61 when the expiration date of the white ink is the closest among the inks held by the 3D printer 10, or may form at least a part of the interior layer 71 of the support portion 70 with clear ink while ensuring the amount of clear ink necessary for realizing the model layer 61 when the expiration date of the clear ink is the closest among the inks held by the 3D printer 10. Furthermore, the 3D printer 10 may not provide the interior layer 61a in the model layer 61 when the expiration date of the white ink and the clear ink is closer than the color ink and the support ink, or may not provide the interior layer 71 in the support portion 70 when the expiration date of the support ink is closer than the color ink, the white ink, and the clear ink.

Since the 3D printer 10 forms a part of the interior of the three-dimensional object 50 with an ink of lower price than the ink according to the original manufacturing data, the manufacturing cost of the three-dimensional object 50 can be reduced.

At least some of the various functions of the ejection controller 25a in each of the above-described embodiments may be realized by at least one computer outside the 3D printer 10.

## Claims

1. A three-dimensional object manufacturing system (10) for manufacturing a three-dimensional object (50) with a plurality of inks, the three-dimensional object (50) including a target shaped object (60) serving as a target,
the three-dimensional object manufacturing system (10) being configured to manufacture the three-dimensional object (50) such that it includes a support portion (70) for supporting the target shaped object (60) at the time of shaping of the target shaped object (60) as required,
the three-dimensional object manufacturing system (10) comprising:
an inkjet head (13) that is configured to eject the ink; and
an ejection controller (25a) that is configured to control ejection of the ink by the inkjet head (13), and
a plurality of cartridges (16a) for storing inks of different colors,
the cartridges (16a) are configured to store:
a coloring ink for forming a colored layer (62) for realizing a color of the outer appearance of the target shaped object (60); and
a non-coloring ink that is not the coloring ink for forming at least one of the target shaped object (60), excluding the colored layer (62), and the support portion (70),
the three-dimensional object manufacturing system (10) being configured to manufacture the three-dimensional object (50) by forming a part of an interior of the three-dimensional object (50) with an ink that is different from an ink according to original manufacturing data, in such a manner that an outer appearance of the target shaped object (60) is the same as if the three-dimensional object (50) was manufactured by forming the entire three-dimensional object (50) with the ink according to the original manufacturing data,
**characterized in that**:
a storage medium is attached to each of the cartridges (16a), the storage medium storing information including an expiration date of the corresponding ink;
the three-dimensional object manufacturing system (10) further comprises cartridge readers (16) for acquiring the expiration date of the corresponding ink from the cartridges (16a);
the ejection controller (25a) is configured to fill at least one of the interior of the target shaped object (60) and the interior of the support portion (70) that is not the colored layer (62) with ink whose expiration date is closest among the plurality of coloring inks, based on an expiration dates of the inks that have been acquired by the cartridge readers (16).

2. The three-dimensional object manufacturing system (10) according to claim 1, wherein the plurality of cartridges (16a) are configured to store:
a coloring ink for forming a colored layer (62) on a surface of the target shaped object (60); and
an inner ink for filling in an inner layer (61) of the target shaped object (60), on an inner side of the colored layer (62), and
the three-dimensional object manufacturing system (10) is configured to form a portion in the inner layer (61) that does not affect a color of the colored layer (62) when observed from an outer side of the target shaped object (60) with the coloring ink, which is different from the inner ink according to the original manufacturing data.

3. The three-dimensional object manufacturing system (10) according to claim 1 or 2, wherein if a plurality of inks whose expirations dates have been acquired by the readers (16) have the same expiration date, three-dimensional object manufacturing system (10) is configured to form a part of the interior of the three-dimensional object (50) with ink that is lower in price than the ink according to the original manufacturing data.

4. The three-dimensional object manufacturing system (10) according to claim 1 or 2, wherein, if there were an insufficient amount of ink if the entire interior of the three-dimensional object (50) were to be formed with the ink according to the original manufacturing data, then a part of the interior of the three-dimensional object (50) is formed not with the ink that becomes insufficient in amount when the interior of the three-dimensional object (50) is entirely formed with the ink according to the original manufacturing data but with an ink that remains if the entire three-dimensional object (50) were to be formed with the ink according to the original manufacturing data.

5. The three-dimensional object manufacturing system (10) according to claim 1, wherein the ejection controller (25a) is configured to fill at least one of the interior of the target shaped object (60) and the interior of the support portion (70) that is not the colored layer (62) with the coloring ink while ensuring a necessary coloring ink amount which is an amount of coloring ink necessary for forming the colored layer (62).

6. The three-dimensional object manufacturing system (10) according to claim 5, wherein
if it is apparent before the start of the shaping of the three-dimensional object (50) that the amount of non-coloring ink is insufficient to form at least one of the target shaped object (60), excluding the colored layer (62), and the support portion (70) with only the non-coloring ink,
the ejection controller (25a) is configured to:
start the shaping of the three-dimensional object (50) when the insufficient amount is less than or equal to a remaining amount obtained by subtracting the necessary coloring ink amount from the amount of the coloring ink held by the three-dimensional object manufacturing system (10), and
not start the shaping of the three-dimensional object (50) when the insufficient amount exceeds the remaining amount.

7. The three-dimensional object manufacturing system (10) according to claim 5 or 6, wherein when it becomes apparent during the shaping of the three-dimensional object (50) that the amount of non-coloring ink is insufficient to form at least one of the target shaped object (60), excluding the colored layer (62), and the support portion (70) with only the non-coloring ink, the ejection controller (25a) is configured to fill at least one of the interior of the target shaped object (60) and the interior of the support portion (70) that is not the colored layer (62) with the coloring ink.

8. A three-dimensional object manufacturing program for manufacturing a three-dimensional object (50) with a plurality of inks, the three-dimensional object (50) including a target shaped object (60) serving as a target,
wherein the program, when executed by the ejection controller (25a) of a three-dimensional object manufacturing system (10) according to any one of claims 1 to 7, causes the three-dimensional object manufacturing system (10)
to manufacture the three-dimensional object (50) by forming a part of an interior of the three-dimensional object (50) with an ink that is different from an ink according to original manufacturing data, in such a manner that an outer appearance of the target shaped object (60) is the same as if the three-dimensional object (50) was manufactured by forming the entire three-dimensional object (50) with the ink according to the original manufacturing data, and
to fill at least one of the interior of the target shaped object (60) and the interior of the support portion (70) that is not the colored layer (62) with ink whose expiration date is closest among the plurality of coloring inks, based on an expiration dates of the inks that have been acquired by the cartridge readers (16).

## Patentansprüche

1. 3D-Objektherstellungssystem (10) zur Herstellung eines dreidimensionalen Objekts (50) mit mehreren Tinten, wobei das dreidimensionale Objekt (50) ein als Ziel dienendes zielgeformtes Objekt (60) umfasst,
wobei das 3D-Objektherstellungssystem (10) eingerichtet ist, das dreidimensionale Objekt (50) so herzustellen, dass es nach Bedarf einen Stützabschnitt (70) zum Stützen des zielgeformten Objekts (60) zum Zeitpunkt des Formens des zielgeformten Objekts (60) umfasst,
wobei das 3D-Objektherstellungssystem (10) umfasst:
einen Tintenstrahlkopf (13), der eingerichtet ist, die Tinte auszustoßen; und
eine Ausstoßsteuerung (25a), die eingerichtet ist, den Ausstoß der Tinte durch den Tintenstrahlkopf (13) zu steuern, und
mehrere Kartuschen (16a) zum Speichern von Tinten unterschiedlicher Farben,
wobei die Kartuschen (16a) eingerichtet sind, zu speichern:
eine Farbtinte zum Bilden einer farbigen Schicht (62) zum Realisieren einer Farbe des äußeren Erscheinungsbilds des zielgeformten Objekts (60); und
eine nichtfärbende Tinte, die nicht die Farbtinte zum Bilden des zielgeformten Objekts (60), ausschließlich der farbigen Schicht (62), und/oder des Stützabschnitts (70) ist,
wobei das 3D-Objektherstellungssystem (10) eingerichtet ist, das dreidimensionale Objekt (50) durch Bilden eines Teils eines Inneren des dreidimensionalen Objekts (50) mit einer Tinte, die sich von einer Tinte gemäß ursprünglichen Herstellungsdaten unterscheidet, derart herzustellen, dass ein äußeres Erscheinungsbild des zielgeformten Objekts (60) dasselbe ist, wie wenn das dreidimensionale Objekt (50) durch Bilden des gesamten dreidimensionalen Objekts (50) mit der Tinte gemäß den ursprünglichen Herstellungsdaten hergestellt wurde, **dadurch gekennzeichnet, dass**:
ein Speichermedium an jeder der Kartuschen (16a) angebracht ist, wobei das Speichermedium Informationen speichert, die ein Ablaufdatum der entsprechenden Tinte umfassen;
das 3D-Objektherstellungssystem (10) ferner Kartuschenleser (16) zum Erfassen des Ablaufdatums der entsprechenden Tinte von den Kartuschen (16a) umfasst;
die Ausstoßsteuerung (25a) eingerichtet ist, das Innere des zielgeformten Objekts (60) und/oder das Innere des Stützabschnitts (70), das nicht die farbige Schicht (62) ist, mit Tinte zu füllen, deren Ablaufdatum unter den mehreren Farbtinten am nächsten ist, basierend auf Ablaufdaten der Tinten, die von den Kartuschenlesern (16) erfasst wurden.

2. 3D-Objektherstellungssystem (10) nach Anspruch 1, wobei die mehreren Kartuschen (16a) eingerichtet sind, zu speichern:
eine Farbtinte zum Bilden einer farbigen Schicht (62) auf einer Oberfläche des zielgeformten Objekts (60); und
eine innere Tinte zum Füllen einer inneren Schicht (61) des zielgeformten Objekts (60) auf einer Innenseite der farbigen Schicht (62), und
das 3D-Objektherstellungssystem (10) eingerichtet ist, einen Abschnitt in der inneren Schicht (61) zu bilden, der eine Farbe der farbigen Schicht (62) nicht beeinflusst, wenn er von einer Außenseite des zielgeformten Objekts (60) mit der Farbtinte betrachtet wird, die sich von der inneren Tinte gemäß den ursprünglichen Herstellungsdaten unterscheidet.

3. 3D-Objektherstellungssystem (10) nach Anspruch 1 oder 2, wobei, wenn mehrere Tinten, deren Ablaufdaten durch die Leser (16) erfasst wurden, dasselbe Ablaufdatum aufweisen, das 3D-Objektherstellungssystem (10) eingerichtet ist, einen Teil des Inneren des dreidimensionalen Objekts (50) mit Tinte zu bilden, deren Preis niedriger ist als der der Tinte gemäß den ursprünglichen Herstellungsdaten.

4. 3D-Objektherstellungssystem (10) nach Anspruch 1 oder 2, wobei, falls es eine unzureichende Tintenmenge gäbe, wenn das gesamte Innere des dreidimensionalen Objekts (50) mit der Tinte gemäß den ursprünglichen Herstellungsdaten gebildet werden würde, dann ein Teil des Inneren des dreidimensionalen Objekts (50) nicht mit der Tinte gebildet wird, deren Menge unzureichend wird, wenn das Innere des dreidimensionalen Objekts (50) vollständig mit der Tinte gemäß den ursprünglichen Herstellungsdaten gebildet würde, sondern mit einer Tinte, die verbleibt, wenn das gesamte dreidimensionale Objekt (50) mit der Tinte gemäß den ursprünglichen Herstellungsdaten gebildet werden würde.

5. 3D-Objektherstellungssystem (10) nach Anspruch 1, wobei die Ausstoßsteuerung (25a) eingerichtet ist, das Innere des zielgeformten Objekts (60) und/oder das Innere des Stützabschnitts (70), das nicht die farbige Schicht (62) ist, mit der Farbtinte zu füllen, während eine notwendige Farbtintenmenge sichergestellt wird, die eine Menge an Farbtinte ist, die zum Bilden der farbigen Schicht (62) notwendig ist.

6. 3D-Objektherstellungssystem (10) nach Anspruch 5, wobei
wenn vor dem Beginn des Formens des dreidimensionalen Objekts (50) ersichtlich ist, dass die Menge an nichtfärbender Tinte nicht ausreicht, um das zielgeformte Objekt (60), ausschließlich der farbigen Schicht (62), und/oder den Stützabschnitt (70) nur mit der nichtfärbenden Tinte zu bilden,
die Ausstoßsteuerung (25a) eingerichtet ist:
das Formen des dreidimensionalen Objekts (50) zu beginnen, wenn die nicht ausreichende Menge kleiner oder gleich einer verbleibenden Menge ist, die durch Subtrahieren der notwendigen Menge an färbender Tinte von der Menge an färbender Tinte, die durch das 3D-Objektherstellungssystem (10) gehalten wird, erhalten wird, und
das Formen des dreidimensionalen Objekts (50) nicht zu beginnen, wenn die nicht ausreichende Menge die verbleibende Menge übersteigt.

7. 3D-Objektherstellungssystem (10) nach Anspruch 5 oder 6, wobei, wenn während des Formens des dreidimensionalen Objekts (50) ersichtlich wird, dass die Menge an nichtfärbender Tinte nicht ausreicht, um das zielgeformte Objekt (60), ausschließlich der farbigen Schicht (62), und/oder den Stützabschnitt (70) nur mit der nichtfärbenden Tinte zu bilden, die Ausstoßsteuerung (25a) eingerichtet ist, das Innere des zielgeformten Objekts (60) und/oder das Innere des Stützabschnitts (70), das nicht die farbige Schicht (62) ist, mit der Farbtinte zu füllen.

8. 3D-Objektherstellungsprogramm zur Herstellung eines dreidimensionalen Objekts (50) mit mehreren Tinten, wobei das dreidimensionale Objekt (50) ein als Ziel dienendes zielgeformtes Objekt (60) umfasst,
wobei das Programm, wenn es von der Ausstoßsteuerung (25a) eines 3D-Objektherstellungssystems (10) nach einem der Ansprüche 1 bis 7 ausgeführt wird, das 3D-Objektherstellungssystem (10) veranlasst,
das dreidimensionale Objekt (50) durch Bilden eines Teils eines Inneren des dreidimensionalen Objekts (50) mit einer Tinte, die sich von einer Tinte gemäß ursprünglichen Herstellungsdaten unterscheidet, derart herzustellen, dass ein äußeres Erscheinungsbild des zielgeformten Objekts (60) dasselbe ist, wie wenn das dreidimensionale Objekt (50) durch Bilden des gesamten dreidimensionalen Objekts (50) mit der Tinte gemäß den ursprünglichen Herstellungsdaten hergestellt wurde, und
das Innere des zielgeformten Objekts (60) und/oder das Innere des Stützabschnitts (70), das nicht die farbige Schicht (62) ist, mit Tinte zu füllen, deren Ablaufdatum unter den mehreren Farbtinten am nächsten ist, basierend auf Ablaufdaten der Tinten, die von den Kartuschenlesern (16) erfasst wurden.

## Revendications

1. Système de fabrication d'objet 3D (10) pour fabriquer un objet tridimensionnel (50) avec une pluralité d'encres, l'objet tridimensionnel (50) comprenant un objet formé cible (60) servant de cible,
le système de fabrication d'objet 3D (10) étant configuré pour fabriquer l'objet tridimensionnel (50) de sorte qu'il comprend une partie de support (70) pour supporter l'objet formé cible (60) au moment de la mise en forme de l'objet formé cible (60) comme requis,
le système de fabrication d'objet 3D (10) comprenant :
une tête à jet d'encre (13) qui est configurée pour éjecter l'encre ; et
un dispositif de commande d'éjection (25a) qui est configuré pour commander l'éjection de l'encre par la tête à jet d'encre (13), et
une pluralité de cartouches (16a) pour stocker des encres de différentes couleurs,
les cartouches (16a) sont configurées pour stocker :
une encre colorante pour former une couche colorée (62) pour réaliser une couleur de l'aspect extérieur de l'objet formé cible (60) ; et
une encre non colorante qui n'est pas l'encre colorante pour former au moins l'un de l'objet formé cible (60), à l'exclusion de la couche colorée (62), et de la partie de support (70),
le système de fabrication d'objet 3D (10) étant configuré pour fabriquer l'objet tridimensionnel (50) en formant une partie d'un intérieur de l'objet tridimensionnel (50) avec une encre qui est différente d'une encre selon des données de fabrication d'origine, de telle manière qu'un aspect extérieur de l'objet formé cible (60) est le même que si l'objet tridimensionnel (50) était fabriqué en formant l'objet tridimensionnel entier (50) avec l'encre selon les données de fabrication d'origine,
**caractérisé en ce que** :
un support de stockage est fixé à chacune des cartouches (16a), le support de stockage stockant des informations comprenant une date d'expiration de l'encre correspondante ;
le système de fabrication d'objet 3D (10) comprend en outre des lecteurs de cartouche (16) pour acquérir la date d'expiration de l'encre correspondante à partir des cartouches (16a) ;
le dispositif de commande d'éjection (25a) est configuré pour remplir au moins l'un de l'intérieur de l'objet formé cible (60) et de l'intérieur de la partie de support (70) qui n'est pas la couche colorée (62) avec de l'encre dont la date d'expiration est la plus proche parmi la pluralité d'encres colorantes, sur la base d'une date d'expiration des encres qui ont été acquises par les lecteurs de cartouche (16).

2. Système de fabrication d'objet 3D (10) selon la revendication 1, dans lequel la pluralité de cartouches (16a) sont configurées pour stocker :
une encre colorante pour former une couche colorée (62) sur une surface de l'objet formé cible (60) ; et
une encre interne pour remplir une couche interne (61) de l'objet formé cible (60), sur un côté interne de la couche colorée (62), et
le système de fabrication d'objet 3D (10) est configuré pour former une partie dans la couche interne (61) qui n'affecte pas une couleur de la couche colorée (62) lorsqu'elle est observée depuis un côté extérieur de l'objet formé cible (60) avec l'encre colorante, qui est différente de l'encre interne selon les données de fabrication d'origine.

3. Système de fabrication d'objet 3D (10) selon la revendication 1 ou 2, dans lequel, si une pluralité d'encres dont les dates d'expiration ont été acquises par les lecteurs (16) ont la même date d'expiration, le système de fabrication d'objet 3D (10) est configuré pour former une partie de l'intérieur de l'objet tridimensionnel (50) avec une encre qui est moins chère que l'encre selon les données de fabrication d'origine.

4. Système de fabrication d'objet 3D (10) selon la revendication 1 ou 2, dans lequel, s'il y avait une quantité insuffisante d'encre si l'intérieur entier de l'objet tridimensionnel (50) devait être formé avec l'encre selon les données de fabrication d'origine, alors une partie de l'intérieur de l'objet tridimensionnel (50) n'est pas formée avec l'encre dont la quantité devient insuffisante lorsque l'intérieur de l'objet tridimensionnel (50) est entièrement formé avec l'encre selon les données de fabrication d'origine, mais avec une encre qui reste si l'objet tridimensionnel entier (50) devait être formé avec l'encre selon les données de fabrication d'origine.

5. Système de fabrication d'objet 3D (10) selon la revendication 1, dans lequel le dispositif de commande d'éjection (25a) est configuré pour remplir au moins l'un de l'intérieur de l'objet formé cible (60) et de l'intérieur de la partie de support (70) qui n'est pas la couche colorée (62) avec l'encre colorante tout en assurant une quantité d'encre colorante nécessaire qui est une quantité d'encre colorante nécessaire pour former la couche colorée (62).

6. Système de fabrication d'objet 3D (10) selon la revendication 5, dans lequel
s'il est apparent avant le début de la mise en forme de l'objet tridimensionnel (50) que la quantité d'encre non colorante est insuffisante pour former au moins l'un de l'objet formé cible (60), à l'exclusion de la couche colorée (62), et de la partie de support (70) avec uniquement l'encre non colorante,
le dispositif de commande d'éjection (25a) est configuré pour :
commencer la mise en forme de l'objet tridimensionnel (50) lorsque la quantité insuffisante est inférieure ou égale à une quantité restante obtenue en soustrayant la quantité d'encre colorante nécessaire de la quantité de l'encre colorante maintenue par le système de fabrication d'objet 3D (10), et
ne pas commencer la mise en forme de l'objet tridimensionnel (50) lorsque la quantité insuffisante dépasse la quantité restante.

7. Système de fabrication d'objet 3D (10) selon la revendication 5 ou 6, dans lequel lorsqu'il devient apparent pendant la mise en forme de l'objet tridimensionnel (50) que la quantité d'encre non colorante est insuffisante pour former au moins l'un de l'objet formé cible (60), à l'exclusion de la couche colorée (62), et de la partie de support (70) avec uniquement l'encre non colorante, le dispositif de commande d'éjection (25a) est configuré pour remplir au moins l'un de l'intérieur de l'objet formé cible (60) et de l'intérieur de la partie de support (70) qui n'est pas la couche colorée (62) avec l'encre colorante.

8. Programme de fabrication d'objet tridimensionnel pour fabriquer un objet tridimensionnel (50) avec une pluralité d'encres, l'objet tridimensionnel (50) comprenant un objet formé cible (60) servant de cible,
dans lequel le programme, lorsqu'il est exécuté par le dispositif de commande d'éjection (25a) d'un système de fabrication d'objet 3D (10) selon l'une quelconque des revendications 1 à 7, amène le système de fabrication d'objet 3D (10)
à fabriquer l'objet tridimensionnel (50) en formant une partie d'un intérieur de l'objet tridimensionnel (50) avec une encre qui est différente d'une encre selon des données de fabrication d'origine, de telle manière qu'un aspect extérieur de l'objet formé cible (60) est le même que si l'objet tridimensionnel (50) était fabriqué en formant l'objet tridimensionnel entier (50) avec l'encre selon les données de fabrication d'origine, et
à remplir au moins l'un de l'intérieur de l'objet formé cible (60) et de l'intérieur de la partie de support (70) qui n'est pas la couche colorée (62) avec de l'encre dont la date d'expiration est la plus proche parmi la pluralité d'encres colorantes, sur la base d'une date d'expiration des encres qui ont été acquises par les lecteurs de cartouche (16).
